# EUROPÄISCHE PATENTSCHRIFT

(11) **EP 0 879 077 B1**
(45) Veröffentlichungstag und Bekanntmachung des Hinweises auf die Patenterteilung: **13.06.2001**
(21) Anmeldenummer: 96939750.4
(22) Anmeldetag: 02.12.1996
(51) Int. Cl.: B01D 29/01, B01D 29/11, B01D 33/073, B29C 47/68

(54) **VORRICHTUNG ZUR FILTERUNG PLASTIFIZIERTEN THERMOPLASTISCHEN KUNSTSTOFFGUTES UND FILTERELEMENT FÜR EINE SOLCHE VORRICHTUNG**
DEVICE FOR FILTERING PLASTICISED THERMOPLASTICS AND FILTER UNIT THEREFOR
DISPOSITIF DE FILTRATION DE PRODUITS THERMOPLASTIQUES PLASTIFIES ET ELEMENT FILTRANT POUR UN TEL DISPOSITIF

(30) Priorität: 22.01.1996 AT 10296
(43) Veröffentlichungstag der Anmeldung: 25.11.1998
(73) Patentinhaber: BACHER, Helmut, A-4490 St. Florian (AT); SCHULZ, Helmuth, A-4490 St. Florian (AT); WENDELIN, Georg, A-4433 Linz (AT)
(72) Erfinder: BACHER, Helmut, A-4490 St. Florian (AT); SCHULZ, Helmuth, A-4490 St. Florian (AT); WENDELIN, Georg, A-4433 Linz (AT)
(74) Vertreter: Wildhack, Helmut, Dr. Dipl.-Ing.
(86) Internationale Anmeldenummer: AT9600240
(87) Internationale Veröffentlichungsnummer: WO9726973

(56) Entgegenhaltungen:
- WO-A-93/15819
- WO-A-94/17981
- DE-A- 3 122 131

## Beschreibung

Die Erfindung bezieht sich auf eine Vorrichtung zur Filterung plastifizierten thermoplastischen Kunststoffgutes, mit einem Gehäuse mit zumindest einem Zuströmkanal für das zu filtrierende Gut, der dieses Gut zur Zustromseite zumindest eines Filterelementes führt, wobei das Filterelement feine Filtrierlöcher für das Filtrat hat, und von der Abstromseite des Filterelementes zumindest ein Abströmkanal für das Filtrat aus dem Gehäuse herausführt, und wobei an der Zustromseite des Filterelementes relativ zum Filterelement bewegte Schaber angeordnet sind, deren Schabkanten beim Bestreichen des Filterelementes die Rückstände entlang der Oberfläche des Filterelementes zu zumindest einem Abfuhrkanal führen, und wobei in Abfuhrrichtung der Rückstände an die mit Filtrierlöchern versehene Zone des Filterelementes eine lochfreie Zone anschließt, die gleichfalls von den Schabern bestrichen wird.

Weiters bezieht sich die Erfindung auf ein Filterelement für eine solche Vorrichtung.

Eine solche Vorrichtung ist bekannt (WO 93/15819). Dort ist die an die hohlzylindrische, gelochte Filterzone anschließende lochfreie Zone als massiver Zylinder ausgebildet, um die Torsionsfestigkeit des um seine Längsachse verdrehten Filterelementes zu erhöhen.

Die Erfindung setzt sich zur Aufgabe, eine Vorrichtung zur Filterung plastifizierter thermoplastischer Kunststoffmassen der eingangs geschilderten Art hinsichtlich Lebensdauer und Filterwirkung weiter zu verbessern. Die Erfindung löst diese Aufgabe dadurch, daß in der den Schabern zugewendeten Oberfläche der lochfreien Zone des Filterelementes Nuten vorhanden sind, deren Richtung sich mit der Richtung der über diese Nuten streichenden Schabkanten der Schaber kreuzt, derart, daß die auf der lochfreien Zone befindliche eingedickte Masse verstärkt gegen den Abfuhrkanal transportiert wird.

Der Erfindung liegen folgende Erkenntnisse zugrunde: bei den meisten bisher bekannten Filtervorrichtungen gleiten die Schaber über die gelochte Filterfläche und schieben dabei die Verunreinigungen, welche aus der zu filtrierenden Masse abgeschieden werden, vor sich her und gegen den Abfuhrkanal zu. Diese Rückstandsmasse verdickt gegen den Abfuhrkanal immer mehr und die in der Regel festen Verunreinigungen üben eine schabende Wirkung auf die Filterfläche aus. Im Bereich des Abfuhrkanales kommt es daher zu einer extremen Verschleißerscheinung des Filterelementes, was dort eine Materialabtragung an dem Filterelement zur Folge hat, so daß das Filterelement in diesem Bereich letztlich den auftretenden Drücken nicht mehr gewachsen ist und bricht. Diese Gefahr besteht umsomehr, je höher der Druck des zugeführten zu filtrierenden Kunststoffgutes ist, welcher Druck bei neuzeitlichen Filtervorrichtungen 300 bar und mehr betragen kann. Der Verschleiß des Filterelementes wird noch gesteigert durch den Effekt, daß die Löcher der Filterzone gleichsam Widerlager für die von den Schabern transportierte Rückstandsmasse bilden, denn komförmige Bestandteile der Rückstandsmasse treten formschlüssig in diese Löcher ein.

Außerdem haben Untersuchungen gezeigt, daß unmittelbar vor den Schabern die Konzentration der Feststoffanteile der von den Schabern vor sich her geschobenen Masse sehr hoch ist, d.h. diese Masse ist sehr stark eingedickt. Unmittelbar hinter den Schabern bildet sich aber eine Reinheitszone, in welche das unter Druck stehende zu filtrierende Material einströmt. Wenn solche, noch im wesentlichen unfiltrierte Gutanteile aber in den Bereich des Abfuhrkanales gelangen, so wird dort verhältnismäßig reines Material abgezogen. Das im Abfuhrkanal, zumeist von der Austragschnecke transportierte Material ist daher in seiner Zusammensetzung stark inhomogen, denn es wechseln Partien, die von den vor den Schabern liegenden Bereichen herrühren, ab mit Partien, die von den hinter den Schabern liegenden Bereichen herrühren. Erstere Partien beinhalten zumeist stark eingedicktes Gut, dessen Verunreinigungsanteil relativ hoch ist, wogegen bei letzteren Partien der Kunststoffanteil relativ hoch und der Anteil an Verunreinigungen relativ gering ist.

Durch die erfindungsgemäße Maßnahme wird nun erreicht, daß die Schaber nicht über eine durchwegs gelochte Fläche des Filterelementes streichen, sondern daß die dem Abfuhrkanal benachbarte lochfreie Zone mit ihren Nuten für die umlaufende Feststoffmasse gleichsam ein Widerlager bildet, sodaß diese Feststoffmasse verstärkt gegen den Abfuhrkanal transportiert wird. Es handelt sich also gleichsam um förderwirksame Nuten. Hiebei entsteht in vorteilhafter Weise der Effekt, daß sich die Rückstände im dem Abfuhrkanal benachbarten Bereich ansammeln und von dort das Kunststoffmaterial, also die nutzbaren Gutanteile, verdrängen, so daß diese nutzbaren Anteile wieder in den Bereich der Lochzone gelangen und durch deren Löcher filtriert werden. Dies hat zur Folge, daß das im Abfuhrkanal auftretende Material im Vergleich zur eingangs geschilderten bekannten Konstruktion - und auch im Vergleich zu bisher üblichen Filtertype, deren Filterfläche von Schabern bestrichen wird, homogener wird und daß - unerwarteterweise - weniger Kunststoffmaterial in den Abfuhrkanal gelangt, also verloren ist, als dies zu erwarten war. Die Erwartung wäre nämlich, daß die lochfreie Zone die Filterung des Materiales verschlechtert, in der Praxis ist jedoch das Gegenteil der Fall.

Außerdem wird der Mahleffekt auf die Verunreinigungsanteile der eingedickten, von den Schabern transportierte Masse im Vergleich zu einer gelochten Filterzone verkleinert, da die Nuten der erfindungsgemäßen Konstruktion weniger verankernd auf Feststoffanteile der Rückstandsmasse wirken als Löcher.

Die Erfindung ist anwendbar sowohl auf Filterelemente, welche zu einer Längsachse symmetrisch sind, also etwa hohlzylindrische oder nach einer Konusfläche geformte Filterelemente, z.B. solche nach der eingangs erwähnten WO 93/15819, als auch mit besonderem Vorteil auf scheibenförmige, insbesondere kreisscheibenförmige Filterelemente, bei denen der Abfuhrkanal für die Verunreinigungen zentral angeordnet ist. Letzteres deshalb, weil dort die Eindickung der Rückstandsmasse besonders stark auftritt. Das Filterelement kann in allen Fällen sowohl von innen als auch von außen mit dem zu filtrierenden Material beaufschlagt werden, d.h., daß die Durchströmung des Filterelementes nach außen oder nach innen gerichtet sein kann.

Ebenso ist die Erfindung unabhängig vom Umstand, ob das Filterelement bewegt wird (wie bei der zuvor erwähnten WO) oder die Schaber, oder beide Elemente.

Gemäß einer bevorzugten Ausführungsform der Erfindung weist die lochfreie Zone des Filterelementes eine größere Wanddicke auf als die mit Löchern versehene Zone. Dies bringt den Vorteil, daß die Nuten in der lochfreien Zone genügend tief sein können, um die gewünschte Förderwirkung auf die Rückstandsmasse in hohem Maße erfüllen zu können. Bei einem hohlzylindrischen Filterelement, wie es die eingangs erwähnte Literaturstelle zeigt, muß hiebei die lochfreie Zone keineswegs massiv ausgebildet sein, sie kann vielmehr ebenso hohlzylindrisch sein wie die gelochte Filterzone. Der gewonnene Hohlraum bildet nicht nur eine Gewichts- und Materialersparnis, sondern auch die Möglichkeit zur Unterbringung anderer Bestandteile der Vorrichtung.

Die in Abfuhrrichtung der Rückstände gemessene Länge der lochfreien Zone verhält sich zweckmäßig zur in gleicher Richtung gemessenen Länge der mit Löchern versehenen Zone wie 0,5 zu 1 bis 1 zu 1, dieses Maß wird nach den vorliegenden Gegebenheiten und der Art des zumeist zu verarbeitenden Kunststoffgutes bestimmt.

Bei einer bevorzugten Ausführungsform der Erfindung sind die Achsen der Löcher der gelochten Zone in Abfuhrrichtung der Rückstände geneigt, vorzugsweise unter einem Winkel von 60 bis 80° zur Oberfläche des Filterelementes. Bei einem kreisscheibenförmigen Filterelement ist es im Rahmen der Erfindung zweckmäßig, die Zufuhr des Kunststoffgutes vom Rand her erfolgen zu lassen, wobei der Abfuhrkanal im Zentrum des Filterelementes und im Abfuhrkanal eine Schnecke zum Transport der Rückstände angeordnet sind. Bei einem solchen scheibenförmigen Filterelement ist es ferner im Rahmen der Erfindung günstig, die Achsen der Filtriertöcher der gelochten Zone relativ zur radialen Richtung des Filterelementes zu neigen, vorzugsweise um einen Winkel von 30 bis 90°. In einem solchen Fall sind die Lochachsen also sowohl zur radialen Richtung des Filterelementes geneigt, als auch zur Ebene des Filterelementes. Keinesfalls darf jedoch die Lochneigung entgegengesetzt der Laufrichtung der Schaberkanten gerichtet sein, da ansonsten sofort eine Hineinpressung von in der Verunreinigungsmasse enthaltenen Körnchen in die Filtrierlöcher stattfindet. Dies würde einerseits eine Blockierung der betreffenden Filtrierlöcher bedeuten, anderseits eine extreme Beanspruchung der Scherkanten der Schaber.

Die Nuten müssen ebensowenig wie die Schabkanten der Schaber geradlinig verlaufen. In vielen Fällen ist es vielmehr günstig, die Schaber und/oder die Nuten entlang gekrümmter Bahnen verlaufen zu lassen, z.B. spiralenähnlich. Hiebei ist es im Rahmen der Erfindung zweckmäßig, die Nuten entgegengesetzt gekrümmt zu den Schabern verlaufen zu lassen.

Die Nuten haben zweckmäßig sägezahnähnlichen Querschnitt, dessen steilere Flanke an der Ablaufseite der Schaber liegt. Die Nuten bewirken hiebei gleichsam einen Formschluß zwischen eingedicktem Rückstandsmaterial und den Schaberkanten. Diese steilere Flanke bildet eine Sperrkante für die eingedickte Masse, was deren Transport in Richtung zum Abfuhrkanal begünstigt.

Die Schaber können von kontinuierlichen Leisten gebildet sein. Günstiger ist es jedoch im Rahmen der Erfindung, die Schaber entlang leistenartiger Bahnen anzuordnen, jedoch für jede Bahn in Schaberelemente zu unterteilen, die voneinander in Abstand liegen, wobei die zwischen benachbarten Schaberelementen liegenden Lücken aufeinanderfolgender Schaber, in Umlaufrichtung der Schaber bzw. des Filterelementes gesehen, relativ zueinander versetzt sind. Die Unterteilung der Schaberleisten in einzelne Elemente hat den Vorteil, daß die Anlage der von diesen Schaberelementen gebildeten Schabkanten am Filterelement auch dann gesichert ist, wenn sich das Filterelement unter Einfluß des hohen Druckes des zu filtrierenden Gutes, welcher Druck 300 bar und mehr erreichen kann, durchbiegt. Die Versetzung der Schaberelemente gewährleistet, daß Materialpartien, die bei der vorlaufenden Schaberleiste durch die Lücken zwischen benachbarten Schaberelementen durchgetreten sind, von den Elementen der nachfolgenden Schaberleiste erfaßt werden. Aus Sicherheitsgründen sollte jeweils eine ausreichende Überdeckung gegeben sein, da sich sonst ringförmige, von Verschmutzungen gebildete Zonen bilden würden, die nicht mehr wegzubringen wären. Wohl wäre es möglich, die Schaberleiste in Elemente zu unterteilen, die lückenfrei aneinander anschließen, jedoch könnten sich dann an der Übergangsstelle zwischen zwei einander benachbarten Schaberelementen Feststoffteilchen, z.B. Glassplitter, festsetzen, die sich von dort beim Umlauf der Schaberleiste nicht lösen können und immer wieder im Kreis transportiert werden. Die Folge wäre eine ringkreisförmige Abnützung im Filterelement. Befinden sich aber die einzelnen Schaberelemente einer Bahn jeweils in Abstand voneinander, so können die Feststoffteilchen durch die Lücken zwischen zwei Schaberelementen durchtreten und werden vom nachfolgenden Schaberelement aufgefangen und spätestens im Zusammenwirken mit den Nuten der ungelochten Zone des Filterelementes zum Abfuhrkanal transportiert.

Besonders hohen Wirkungsgrad hat eine Konstruktion, bei welcher der Zuströmkanal zwischen zwei scheibenförmige Filterelemente führt, die parallel zueinander angeordnet sind und von Schabern bestrichen werden, die an einem beiden Filterelementen gemeinsamen, zwischen den Filterelementen angeordneten, vorzugsweise ebenfalls scheibenförmigen Schaberträger getragen sind. Eine solche Konstruktion kann mit einer einzigen Austragsschnecke im Abfuhrkanal ausgebildet werden, jedoch hat dies den Nachteil, daß nur von einer der beiden Filterscheiben die Rückstände direkt zur Schnecke fließen können. Von der anderen Filterscheibe müßten die Rückstände durch Öffnungen des Schaberträgers durchtreten, die durch speichenartige Stege voneinander getrennt sind. Die Umlenkung für die zumeist von Feststoffmaterial gebildeten Rückstände ist schwierig zu bewältigen und es lassen sich mit einer solchen Ausführungsform starke Eindickungsgrade nicht realisieren. Günstiger ist es daher im Rahmen der Erfindung, jeder der beiden Filterelemente einen gesonderten Schneckenabschnitt zuzuordnen, wobei die beiden Schneckenabschnitte nach einander entgegengesetzte Richtungen fördern. Dadurch wird die oben erwähnte Umlenkung der Rückstände vermieden. Wenn zumindest einem der beiden Schneckenabschnitte eine Temperatursteuerung zugeordnet ist, läßt sich durch eine Temperaturregelung des Kunststoffmateriales im Bereich der Austragsschnecke eine Beeinflussung der Verhältnisse im ausgetragenen Material erzielen. Stellt man z.B. fest, daß auf der einen Schneckenseite um 10% mehr Kunststoffmaterial im Austrag enthalten ist, dann kann man durch entsprechende Temperatursteuerung dieser Seite erzielen, daß sich eine Verdickung im Austragsmaterial dieser Seite ergibt, derart, daß die Kunststoffanteile im abgeführten Material dieser Seite herabgesetzt werden. Auf diese Weise lassen sich die Austräge auf beiden Seiten einander angleichen.

Ein weiterer wichtiger Gesichtspunkt liegt darin, daß dafür Vorsorge getroffen werden soll, daß die von den Schabern zum Abfuhrkanal transportierten Feststoffpartien von der im Abfuhrkanal gelagerten Schnecke verläßlich aufgenommen werden. Der Idealzustand wäre, daß die Schneckengänge eine Fortsetzung der Schaberleisten bilden. Dies ist jedoch in der Praxis schwierig zu realisieren, da in der Regel eine Vielzahl von Schaberleisten vorgesehen ist und eine gleiche Anzahl von Schneckengängen zur Folge hätte, daß diese Schneckengänge einander sehr nahe benachbart sind. Dies würde die Materialaufnahme durch die Schnecke erschweren. Daher ist es vorzuziehen, die Anordnung so zu treffen, daß das von den Schaberleisten zum Schneckenumfang transportierte Material immer auf einen Zwischenraum zwischen einander benachbarten Schneckengängen trifft. Die Anzahl der Schneckengänge ist daher der Anzahl der Schaberleisten höchstens gleich, in der Regel ist sie geringer.

Im gelochten Filterbereich sind die Schaberelemente zweckmäßig federnd abgestützt und liegen daher unter Druck an der Filterronde bzw. Filterscheibe an. Die Andrückung kann durch federnde Elemente erfolgen, jedoch zusätzlich oder alternativ aucl durch den Druck des zugeführten Materiales bzw. durch den Druckunterschied zwischen de Zustrom- und der Abstromseite des Filters. Dieser Druckunterschied kann etwa 100 bar betragen. Im nichtgelochten Bereich der Siebronde bzw. der Filterscheibe können die Schaber hingegen starre, vom Schaberträger angeordnete Elemente sein, also z.B. eine an einer Schaberträgerscheibe starr angeordnete Planschnecke.

Ein erfindungsgemäßes Filterelement für eine erfindungsgemäße Vorrichtung de beschriebenen Art geht aus von einer Ausbildung mit einer an eine gelochte Zone anschließenden lochfreien Zone. Ein solches Filterelement kennzeichnet sich dadurch, dass in der lochfreien Zone an der Zustromseite des Filterelementes Nuten vorgesehen sind deren Richtung sich mit der Richtung der über diese Nuten streichenden Schabkanten de Schaber kreuzt. Vorzugsweise hat die lochfreie Zone eine größere Wandstärke als die gelochte Zone.

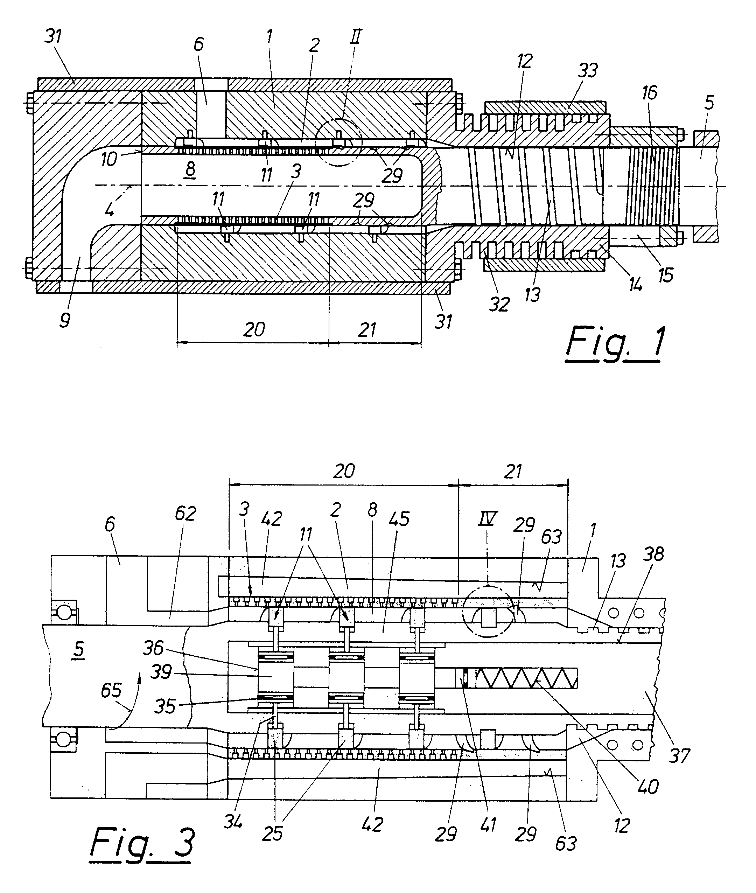

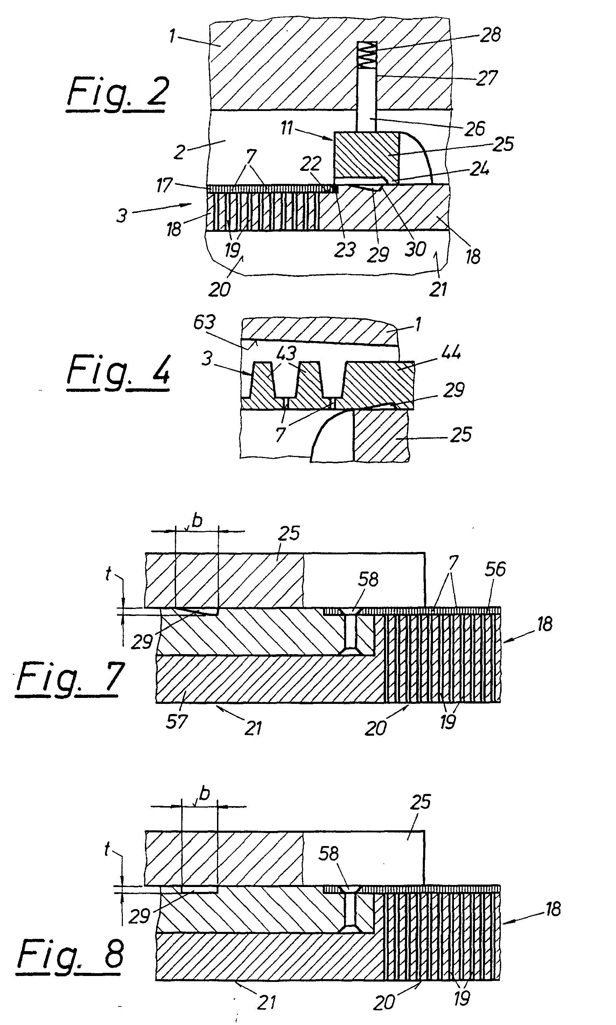

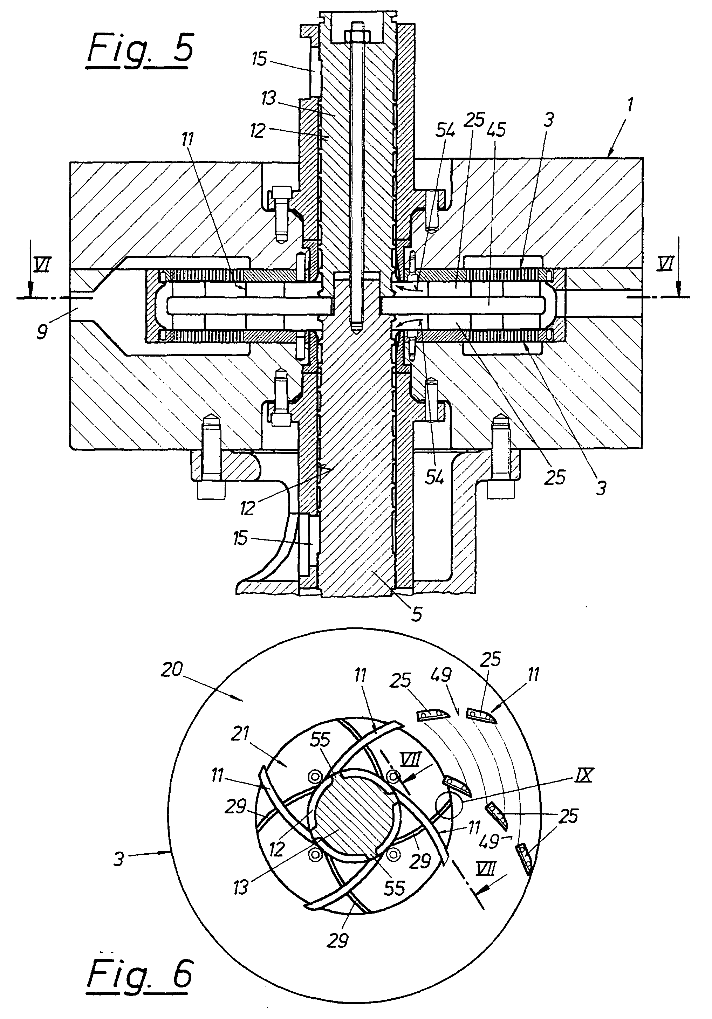

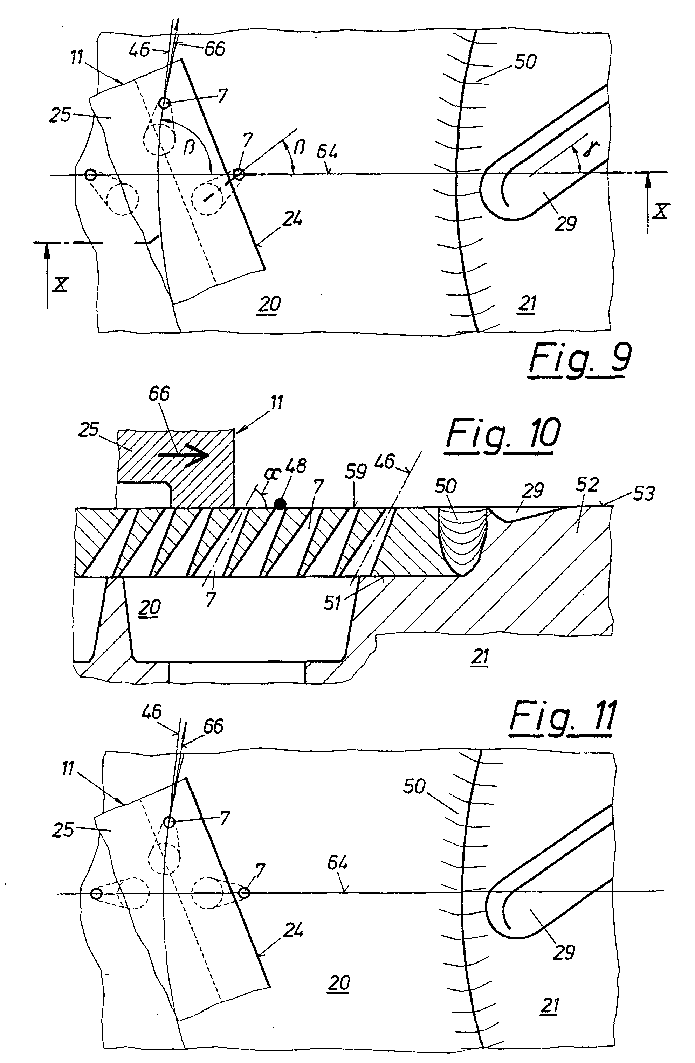

In der Zeichnung sind Ausführungsbeispiele der Erfindung schematisch dargestellt Fig. 1 zeigt einen Axialschnitt durch ein erstes Ausführungsbeispiel, Fig. 2 zeigt das mit II ir Fig. 1 angedeutete Detail in größerem Maßstab im Schnitt. Fig. 3 ist ein Axialschnitt durch ein weiteres Ausführungsbeispiel und Fig. 4 zeigt in größerem Maßstab das in Fig. 3 mit IV bezeichnete Detail im Schnitt. Fig. 5 zeigt einen Axialschnit durch ein drittes Ausführungsbeispiel. Fig. 6 ist ein Schnitt nach der Linie VI-VI der Fig. 5 durch die Schaberträgerscheibe. Fig. 7 ist ein Schnitt nach der Linie VII-VII der Fig. 6 in größeren Maßstab. Fig. 8 zeigt eine Ausführungsvariante zu Fig. 7. Fig. 9 zeigt das in Fig. 6 mit bezeichnete Detail in Ansicht und in größerem Maßstab, Fig. 10 ist ein Schnitt nach der Linie X-X der Fig. 9 und Fig. 11 zeigt eine Variante zu Fig. 9.

Bei der Ausführungsform gemäß den Fig. 1 und 2 hat die Vorrichtung eir hohlzylindrisches Gehäuse 1, das so dickwandig ausgebildet ist, dass es den hoher Drücken des zu filtrierenden Kunststoffgutes (etwa 300 bar) standhalten kann. Irr zylindrischen Hohlraum 2 des Gehäuses 1 ist ein im wesentlichen hohlzylindrisches Filterelement 3 um seine Längsachse 4 drehbar gelagert. Es ist mit einer Welle 5 drehschlüssig verbunden, die von einem nicht dargestellten Motor zur Rotation um die Längsachse 4 angetrieben wird. Das zu filtrierende plastifizierte thermoplastische Kunststoffgut wird durch einen, zumindest zweckmäßig radial verlaufenden Zustromkanal 6 in der Hohlraum 2 zur Außenseite des Filterelementes 3 eingeleitet. Das Filtrat, welches die feiner Filtrierlöcher 7 (Fig.2) des Filterelementes 3 passieren kann, gelangt in den Innenraum 8 des Filterelementes 3 und strömt von dort in zumindest einen, zweckmäßig radial gerichteten Abströmkanal 9, der an das eine, offene Stirnende 10 des Filterelementes 3 anschließt und seitlich aus dem Gehäuse 1 herausführt. Selbstverständlich kann, falls gewünscht, die Ableitung des Filtrates auch in Richtung der Längsachse 4 erfolgen. Die vom Filterelement 3 zurückgehaltenen Rückstände also die Verunreinigungen der zugeführten thermoplastischen Kunststoffmasse, werden durch Schaber 11 von der Außenfläche des Filterelementes 3 abgekratzt. Die Schaber 11 sind so angeordnet, daß sich bei der Drehung des Filterelementes 3 um seine Längsachse 4 eine Förderung der Rückstände in Richtung zu einem Abfuhrkanal 12 ergibt, in welchem eine Schnecke 13 angeordnet ist, die von auf der Welle 5 angeordneten Schneckengängen gebildet ist und die Rückstände in Richtung zu einer seitlich aus einer Verlängerung 14 des Gehäuses 1 herausführenden Abfuhröffnung 15 führt. Auf der Welle 5 ist ferner ein Gewinde 16 mit zur Steigung der Schnecke 13 entgegengesetzter Steigung vorgesehen, welches als Dichtung wirkt.

Das Filterelement 3 (Fig.2) besteht aus einem dünnen Hohlzylinder 17, vorzugsweise einem zu einem Hohlzylinder zusammengefügten Blech, in welchem die feinen Öffnungen 7 vorgesehen sind, die vorzugsweise von Laserbohrungen gebildet sind. Um den Druck des zugeführten, zu filtrierenden Gutes aufnehmen zu können, ist dieser Hohlzylinder 17 an seiner Innenseite durch einen hohlzylindrischen Abstützkörper 18 abgestützt, der Bohrungen 19 aufweist, die zweckmäßig, jedoch nicht zwingend radial verlaufen und deren Durchmesser wesentlich größer ist als jener der feinen Filtrierlöcher 7, sodaß also jeweils mehrere Filtierlöcher 7 in eine Bohrung 19 münden. Die Filtrierlöcher 7 bzw. die in Strömungsrichtung des Filtrates dahinterliegenden Bohrungen 19 bilden eine gelochte Zone 20 (Fig.1) des Filterelementes 3, an welche sich eine lochfreie Zone 21 anschließt, die von einer axialen Verlängerung des Filterelementes 3 bzw. des Abstützkörpers 18 gebildet ist. Wie Fig. 2 zeigt, ist aus konstruktiven Gründen die Anordnung so getroffen, daß die lochfreie Zone 21 im wesentlichen zur Gänze vom Abstützkörper 18 gebildet ist, der an seinem äußeren Umfang eine Absetzung 22 hat, in die der Hohlzylinder 17 eingesetzt und durch eine Schweißung 23 befestigt ist. Natürlich kann der Hohlzylinder 17 am Abstützkörper 18 auch an den anderen Berührungsflächen befestigt sein. Auf diese Weise wird der Hohlzylinder 17 nicht nur genügend abgestützt, sondern auch sicher auf Rotation um die Längsachse 4 mitgenommen. Wie Fig. 1 zeigt, kann der Abstützkörper 18 einstückig in die Welle 5 übergehen und mit einer im wesentlichen radial verlaufenden Wand den Abschluß des Innenraumes 8 in axialer Richtung bilden.

Auch im Bereich der lochfreien Zone 21 sind Schaber 11 angeordnet. Zweckmäßig sind die Schaber 11 jeweils mit Schabkanten 24 versehen, mittels welchen die Verunreinigungen von der Außenfläche des Filterelementes 3 abgekratzt werden. Die Schaber 11 bzw. deren Schabkanten 24 sind entlang einer Schraubenlinie konstanter Steigung angeordnet, jedoch in einzelne Schaberelemente 25 unterteilt, deren jedes für sich nachgiebig, jedoch unverdrehbar im Gehäuse 1 gelagert ist. Hiezu trägt jedes Schaberelement 25 an seinem Außenumfang zwei parallel verlaufende Bolzen 26, die in entsprechende Bohrungen 27 des Gehäuses eingesetzt und dort mittels Federn 28 nachgiebig abgestützt sind. Diese federnde Abstützung jedes Schaberelementes 25 kann unterstützt oder ersetzt werden durch eine Andrückung des Schaberelementes 25 an den Hohlzylinder 17 unter Einfluß des Druckes des zugeführten Kunststoffgutes, welcher Druck radial von außen auf das Schaberelement 25 wirkt. Im Bereich der lochfreien Zone 21 kann eine federnde Abstützung der Schaberelemente 25 überhaupt entfallen, da es in diesem Bereich nur mehr darauf ankommt, die dort schon wesentlich eingedickte Rückstandsmasse verläßlich in Richtung zum Abfuhrkanal 12 zu transportieren. Hierzu weist die lochfreie Zone 21 bzw. der sie bildende Abstützkörper 18 an seiner Außenfläche Nuten 29 auf, deren Richtung sich mit jener der über sie streichenden Schabkanten 24 der Schaberelemente 25 kreuzt, derart, daß sich bei der Relativbewegung zwischen Schaberelementen 25 und Nuten 29 eine verstärkte Förderung der Rückstände in Richtung zum Abfuhrkanal 12 ergibt. Dies wird dadurch bewirkt, daß die Nuten 29 Widerlager für die Rückstandsmasse ergeben, sodaß die Schrägstellung der Schabkanten 24 der Schaberelemente 25 verstärkt zur Wirkung kommt. Der Querschnitt jeder Nut 29 ist etwa sägezahnartig, wobei die steilere Flanke 30 dem Abfuhrkanal 12 zugewendet ist. Die Nuten 29 können, wie die in schraubenlinienförmig verlaufenden Reihen angeordneten Schaberelemente 25, schraubenlinienartig um den Umfang der lochfreien Zone 21 herumlaufen. Sie können ebenfalls in Umfangsrichtung des Abstützkörpers 18 gesehen, unterbrochen sein, ähnlich der Ausbildung der Schaberelemente 25.

Um die gewünschten Temperaturbedingungen im Betrieb der Vorrichtungen einhalten zu können, ist am Gehäuse 1 außen eine Heizeinrichtung 31 in Form eines Heizbandes vorgesehen und im Bereich der Schnecke 13 an der Verlängerung 14 des Gehäuses 1 Kühlrippen 32 sowie eine Kühleinrichtung 33.

Bei der in Fig. 1 dargestellten Ausführungsform beträgt die in axialer Richtung gemessene Länge der gelochten Zone 20 etwa das Doppelte wie die in gleicher Richtung gemessene Länge der ungelochten Zone 21.

Die Anordnung der ungelochten Zone 21 bewirkt keine Anreicherung der durch die Abfuhröffnung 15 austretenden Rückstandsmasse an nutzbarem Kunststoffanteil. Vielmehr sammelt sich auf der lochfreien Zone eine eingedickte Masse, die bereits im wesentlichen frei ist von Kunststoffanteilen. Die noch in dieser Masse zurückgebliebenen Kunststoffanteile werden durch den ausgeübten Druck zurück in die gelochte Zone 20 befördert und dort durch die Filtrierlöcher 7 nutzbar gemacht. Die verstärkte Abriebwirkung der eingedickten Masse im Bereich der lochfreien Zone 21 bleibt ohne nachteiligen Einfluß, da eine Verformung der Nuten 29 durch Abriebwirkung im wesentlichen ohne Einfluß auf die Funktion ist und die in radialer Richtung verstärkte Dicke des Materiales der lochfreien Zone 21 (Abstützkörper 18) vermeidet, daß dort Brüche durch Abnützungserscheinungen auftreten.

Bei der Ausführungsform nach den Fig.3 und 4 wird das Filterelement 3 im Gegensatz zur Ausführungsform nach den Fig.1 und 2 vom Filtrat von innen nach außen durchströmt. Hierzu mündet der Zuströmkanal 6, zweckmäßig über einen ringförmigen Verteilerraum 62, in den zylindrischen Innenraum 8 des hohlzylindrischen Filterelementes 3, in welchem auch die Schaberelemente 25 angeordnet sind. Im Bereich der gelochten Zone 20 und unmittelbar ihr benachbart sind diese Schaberelemente 25 federnd an die Innenfläche des Filterelementes 3 angedrückt. Hiezu sind die Schaberelemente 25 jeweils an ihrer Innenseite mit radialen Bolzen 34 versehen, die an ihren Enden Kolben 35 tragen, die abgedichtet in radialen Bohrungen 36 eines zentralen Wellenmittelteiles 37 geführt sind. Dieser Wellenmittelteil 37 ist in eine axiale Bohrung 38 der Welle 5 eingesetzt und mit ihr drehschlüssig verbunden. Die Kolben 35 sind durch ein in einem mittigen Druckmittelraum 39 befindliches hydraulisches Medium unter Druck gesetzt, wobei dieser Druck durch eine Feder 40 hervorgerufen werden kann, welche über einen Kolben 41 auf dieses Medium wirkt, oder durch eine außenliegende, nicht dargestellte Druckmittelquelle.

Während bei der Ausführungsform nach den Fig.1 und 2 das Filterelement 3 verdreht wird und die Schaber 11 unverdrehbar im Gehäuse 1 gelagert sind, ist bei der Ausführungsform nach den Fig.3 und 4 die Anordnung umgekehrt: Dort werden die Schaber 11 bzw. die sie bildenden Schaberelemente 25 mittels der Welle 5 verdreht und es steht das im Gehäuse 1 eingespannte Filterelement 3 still. Das Filterelement 3 ist von einem zylindrischen Sammelraum 42 für das Filtrat umgeben, der mit dem Abströmkanal 9 in Verbindung steht.

Aus Fig.3 ist ersichtlich, daß die rechts eingezeichneten Schaberelemente 25 in der Zone 21 nicht nachgiebig abgestützt sind, sondern starr in der Welle 5 befestigt sind. Wie bereits erwähnt, liegt der Grund hiefür darin, daß in der lochfreien Zone 21 für den Abtransport der eingedickten Rückstandsmasse im Zusammenwirken mit den Nuten 29 keine federnde Abstützung der Schaberelemente mehr erforderlich ist. Aus Fig.4 ist die Anordnung der Nuten 29 am Innenmantel der lochfreien Zone 21 deutlicher ersichtlich.

Ferner ist bei der Ausführungsform nach den Fig.3 und 4 unterschiedlich zur Ausführungsform nach den Fig.1 und 2, daß das Filterelement 3 inklusive der lochfreien Zone 21 aus einem Stück gefertigt ist. Zwischen den einzelnen Öffnungen 7, welche zweckmäßig mit sich nach außen erweiterndem Querschnitt ausgebildet sind, sind Verstärkungsrippen 43 vorgesehen, welche die nötige Abstützung des Filterelementes 3 gegen den Druck des zugeführten, zu filtrierenden Mediums bilden. Diese Verstärkungsrippen 43 haben gleiche Stärke wie der die lochfreie Zone bildende hohlzylindrische Abschnitt 44, in dessen Innenmantelfläche die Nuten 29 angeordnet sind. Ausbildung und Querschnitt der Nuten sowie der über sie streichenden Schaberelemente 25 können analog der Ausführungsform nach den Fig.1 und 2 gewählt werden, nur ist infolge der anders gerichteten Durchströmung des Filterelementes 3 die im Abfuhrkanal 12 angeordnete Schnecke drehschlüssig mit der, einen rotierenden Schaberträger 45 bildenden, Welle 5 verbunden und nicht, wie bei der Ausführungsform nach den Fig.1 und 2, mit dem Filterelement 3. Die Drehrichtung der Welle 5 (Pfeil 65) und damit der Umlauf der Schaberelemente 25, ist so gewählt, daß sich der gewünschte Transport der vom Filterelement 3 abgekratzten Verunreinigungen in Richtung zum Abführkanal 12 ergibt, welcher Transport, wie erwähnt, durch die Nuten 29 begünstigt wird.

Der Hohlraum 2 muß nicht überall gleiche, in radialer Richtung gemessene Dicke haben. Wie Fig. 3 zeigt, kann die den Hohlraum 2 außen begrenzende Innenwand 63 des Gehäuses 1 gegen den Abfuhrkanal 12 zu geringfügig konisch zulaufen. Dies trägt dem Umstand Rechnung, daß das Volumen der in der Zone 21 pro Zeiteinheit abgeführten Rückstandsmasse geringer ist, als das Volumen der pro Zeiteinheit über den Zuströmkanal 6 zugeführten Masse des zu filtrierenden Mediums, da ja das Filtrat durch die Öffnungen 7 des Filterelementes 3 abgezogen wurde.

Bei der Ausführungsform nach den Fig.5 bis 10 sind im Gehäuse 1 zwei von ebenen Scheiben gebildete Filterelemente 3 parallel zueinander angeordnet. Beide Filterelemente 3 sind im Gehäuse 1 starr und unverdrehbar gehalten. Der Zustromkanal 6 mündet in den Raum zwischen den beiden Filterelementen 3, in welchem sich ein flacher Schaberträger 45 befindet, der mit einer zentralen, das Gehäuse 1 durchsetzenden Welle 5 drehschlüssig verbunden ist. Der Schaberträger 45 trägt entlang gekrümmter Bahnen angeordnete Schaber 11. Die Filterelemente 3 haben Kreisform und im äußeren Bereich (gelochte Zone 20) sind diese Filterelemente als feingelochte Scheiben ausgebildet. Die Anordnung kann hiebei so getroffen sein, wie dies Fig.2 zeigt, d.h. eine dünnwandige Filterscheibe weist die feinen Filtrierlöcher 7 auf und ist durch eine dickere, mit wesentlich gröberen Bohrungen 19 versehene Abstützplatte 18 abgestützt. Es kann jedoch auch, wie Fig. 10 zeigt, nur eine verhältnismäßig dünnwandige, das eigentliche Filterelement 3 bildende Platte vorgesehen sein, deren Filtrierlöcher 7 sich in Durchströmrichtung des Filtrates im Querschnitt vergrößern und deren Achsen 46 zur Ebene der Filterplatte unter einem Winkel α geneigt sind, der bei der dargestellten Ausführungsform etwa 60° beträgt, jedoch bevorzugt zwischen 50 und 80° liegen kann. Diese Neigung der Lochachsen 46 erleichtert das Freikommen von Verunreinigungskörpern, von denen einer schematisch mit 48 angedeutet ist, die sich in den Filtrierlöchern 7 verfangen haben und schützt die Scherkante 59 der Filteröffnungen 7 vor Verschleiß. Zusätzlich können, wie Fig.9 zeigt, die Lochachsen 46 schräg zur Radialrichtung 64 unter einem Winkel β geneigt sein, welcher bevorzugt 30 bis 90° beträgt und nicht für alle Filtrierlöcher 7 gleich groß sein muß. In Extremfällen kann dieser Winkel β auch, wie Fig. 11 zeigt, 0° betragen. Es muß lediglich dafür gesorgt werden, daß die Schabkanten 24 der Schaber 11 bei ihrer Umlaufbewegung (Pfeil 66) so schräg auf eine Lochachse 46 treffen, daß das gegebenenfalls am Rand des Filtrierloches 7 festsitzende Verunreinigungsteilchen 48 (Fig. 10) aus dem Filtrierloch 7 herausgezogen und nicht in dieses hineingedrückt wird. Wie die Fig. 9 und 7 zeigen, kann daher, falls gewünscht, die Neigung β der Filtrierlöcher 7 in Bezug auf die Radialrichtung 64 nach beiden Seiten gerichtet sein, obwohl in der Regel die einseitige Neigung gewählt werden wird.

Im Bereich der gelochten Zone 20, von deren Löchern 7 in den Fig.9 und 11 der Einfachheit halber lediglich drei dargestellt sind, sind die Schaber 11 in voneinander in Abstand liegende Schaberelemente 25 unterteilt. Diese Schaberelemente 25 sind, wie Fig.6 zeigt, so angeordnet, daß, in Umfangsrichtung des Filterelementes 3 gesehen, jeweils eine Lücke 49 zwischen zwei Schaberelementen 25 auf ein Schaberelement 25 der vorhergehenden gekrümmten Schaberleiste trifft, wobei aus Sicherheitsgründen jeweils eine gewisse Überdeckung gegeben ist. Damit ist gesichert, daß Feststoffteilchen zwar durch die Lücken 49 hindurchtreten können, jedoch vom Schaberelement 25 der nachfolgenden Schaberelementreihe aufgefangen werden. Damit wird gewährleistet, daß die Feststoffteilchen verläßlich in Richtung zum Abfuhrkanal 12 (Fig.6) transportiert werden.

Im zentralen Bereich des kreisförmigen Filterelementes 3 ist eine lochfreie Zone 21 verstärkter Wandstärke vorgesehen. Der Anschluß der gelochten Zone 20 an die lochfreie Zone 21 kann, wie die Fig.9, 10 und 11 zeigen, durch eine Schweißnaht 50 erfolgen, wobei die Filterplatte in eine Absetzung 51 der die lochfreie Zone 21 bildenden kreisförmigen Platte 52 eingesetzt und dort angeschweißt ist. In der den Schabern 11 zugewendeten Oberfläche 53 dieser Platte 52 sind die Nuten 29 eingearbeitet, deren Richtung sich mit jener der Schabkanten 24 kreuzt. Der sägezahnähnliche Querschnitt der Nuten 29 ist aus Fig.10 ersichtlich. Wie Fig.6 zeigt, ist die Richtung der Nut 29 jeweils unter einem Winkel γ (Fig.9) zur Radialrichtung 64 geneigt, welcher Winkel von außen nach innen entsprechend dem gekrümmten Verlauf der Nut 29 abnimmt. Es können die Nuten 29 jedoch auch geradlinig verlaufen, wichtig ist lediglich, daß sich die Nuten 29 jeweils mit den Bahnen der Schaberelemente 25 derart kreuzen, daß die Nuten 29 dazu beitragen, die Verunreinigungen gegen das Zentrum des Filterelementes 3, also gegen den Abfuhrkanal 12 zu transportieren.

Auch diese lochfreie Zone 21 wird von Schabern 11 bestrichen, jedoch müssen, wie Fig.6 zeigt, diese Schaber 11 im Bereich der lochfreien Zone 21 nicht in einzelne Elemente 25 unterteilt sein, dies kann jedoch, falls gewünscht, der Fall sein. Zweckmäßig ist die in Umfangsrichtung gezählte Anzahl der Schaber 11 im Bereich der lochfreien Zonen 21 gleich der Anzahl der dort vorhandenen Nuten 29. Die an der Schaberträgerscheibe 45 befestigten leistenartigen Schaber 11, welche der lochfreien Zone 21 zugeordnet sind, sind in der Regel nicht federnd am Schaberträger 45 abgestützt, wie dies für die Schaberelemente 25 der gelochten Zone 20 der Fall ist, sondern am Schaberträger 45 starr befestigt. Es kann jedoch auch für die lochfreie Zone 21 eine federnde Schaberabstützung vorgesehen sein.

Wie erwähnt, transportieren die Schaberelemente 25 der gelochten Zone 20 und die Schaber 11 der lochfreien Zone 21 die Rückstände in Richtung zu einem Abfuhrkanal 12, in welchem zwei Schnecken 13 angeordnet sind, die beide von der Welle 5 angetrieben sind und deren jeweils eine einem der beiden Filterelemente 3 zugeordnet ist und die von diesem Filterelement 3 abgekratzten Verunreinigungen abführt. Die Förderrichtungen der beiden Schnecken 13 sind einander entgegengesetzt gerichtet, die Rückstände werden durch zwei außerhalb des Gehäuses 1 angeordnete Abfuhröffnungen 15 ausgetragen. Diese Anordnung hat gegenüber einer einzigen Austragsschnecke 13 den Vorteil, daß die abgeschabten und eingedickten Verunreinigungen nicht durch eine zentrale Öffnung der Schaberträgerscheibe 45 hindurchgeführt werden müssen. Die Richtung des Abtransportes der Verunreinigungen ist in Fig.5 durch Pfeile 54 angedeutet. Zumindest einer der beiden Schnecken 13 kann eine Temperatursteuerung zugeordnet sein, z.B. eine Heiz- und/oder Kühleinrichtung, um auf beiden Seiten einen gleichmäßigen Austrag zu erhalten.

Zweckmäßig ist die Anordnung so getroffen, daß eine Abstimmung gegeben ist zwischen den inneren Enden der Schaberleisten 11 und den Hohlräumen zwischen benachbarten Gängen 55 (Fig.6) der Schnecke 13, derart, daß die Schaberleisten stets auf einen Hohlraum zwischen zwei benachbarten Gängen 55 treffen. Hiezu ist es zweckmäßig, die Anzahl der Schneckengänge 55, welche im Bereich der Schaberleisten 11 liegen, geringer oder höchstens gleich der Anzahl der Schaberleisten 11 zu wählen.

Aus Fig.7 ist ersichtlich, daß sich die Breite b jeder Nut 29 zur Tiefe t derselben wie etwa 4:1 verhält. Dieses Verhältnis liegt meist zwischen 2:1 und 6:1, vorzugsweise zwischen 3:1 und 5:1. Aus Fig.7 ist ferner eine Variante der Befestigung der gelochten Zone 20 an der ungelochten Zone 21 ersichtlich, und zwar ist der plattenförmige Abstützkörper 18 für das mit den feinen Öffnungen 7 versehene Filterblech 56 mit einem Fortsatz 57 versehen, welcher eine Absetzung bildet, in welche die Platte, in welche die Nuten 29 eingearbeitet sind, eingesetzt und mittels Nieten 58 am Filterblech 56 befestigt ist.

Fig.8 zeigt eine Ausführungsvariante hiefür, bei welcher der Anschluß der lochfreien Zone 21 an die gelochte Zone 20 durch eine Schweißnaht 50 ähnlich Fig.10 erfolgt. Ferner ist aus Fig.8 ersichtlich, daß der Querschnitt der Nuten 29 auch annähernd rechteckig sein kann.

## Patentansprüche

1. Vorrichtung zur Filterung plastifizierten thermoplastischen Kunststoffgutes, mit einem Gehäuse (1) mit zumindest einem Zustromkanal (6) für das zu filtrierende Gut, der dieses Gut zur Zustromseite zumindest eines Filterelementes (3) führt, wobei das Filterelement (3) feine Filtrierlöcher (7) für das Filtrat hat, und von der Abstromseite des Filterelementes (3) zumindest ein Abstromkanal (9) für das Filtrat aus dem Gehäuse (1) herausführt, und wobei an der Zustromseite des Filterelementes (3) relativ zum Filterelement (3) bewegte Schaber (11) angeordnet sind, deren Schabkanten (24) beim Bestreichen des Filterelementes (3) die Rückstände entlang der Oberfläche des Filterelementes (3) zu zumindest einem Abfuhrkanal (12) führen, und wobei in Abfuhrrichtung der Rückstände an die mit Filtrierlöchern (7) versehene Zone (20) des Filterelementes (3) eine lochfreie Zone (21) anschließt, die gleichfalls von den Schabern (11) bestrichen wird, dadurch gekennzeichnet, daß in der den Schabern (11) zugewendeten Oberfläche (53) der lochfreien Zone (21) Nuten (29) vorhanden sind, deren Richtung sich mit der Richtung der über diese Nuten (29) streichenden Schabkanten (24) der Schaber (11) derart kreuzt, daß die auf der lochfreien Zone (21) befindliche eingedickte Masse verstärkt gegen den Abfuhrkanal (12) transportiert wird.

2. Vorrichtung nach Anspruch 1, dadurch gekennzeichnet, daß die lochfreie Zone (21) des Filterelementes (3) eine größere Wandstärke aufweist als die mit Filtrierlöchern (7) versehene Zone (20).

3. Vorrichtung nach Anspruch 1 und 2, dadurch gekennzeichnet, daß die in Abfuhrrichtung der Rückstände gemessene Länge der lochfreien Zone (21) sich zur in gleicher Richtung gemessenen Länge der mit Filtrierlöchern (7) versehenen Zone (20) wie 0,5:1 bis 1:1 verhält.

4. Vorrichtung nach einem der Ansprüche 1 bis 3, dadurch gekennzeichnet, daß die Achsen (46) der Filtrierlöcher (7) in Abfuhrrichtung der Rückstände geneigt sind, vorzugsweise unter einem Winkel α von 50 bis 80° zur Oberfläche (53) des Filterelementes (3).

5. Vorrichtung nach einem der Ansprüche 1 bis 4, dadurch gekennzeichnet, daß die Schaber (11) und bzw. oder die Nuten (29) entlang gekrümmter Bahnen verlaufen, z.B. spiralenähnlich.

6. Vorrichtung nach Anspruch 5, dadurch gekennzeichnet, daß die Nuten (29) entgegengesetzt gekrümmt zu den Schabern (11) verlaufen.

7. Vorrichtung nach einem der Ansprüche 1 bis 6, dadurch gekennzeichnet, daß die Schaber (11) gegen eine im Abfuhrkanal (12) angeordnete Schnecke (13) fördern, wobei die Anzahl der Schneckengänge gleich oder vorzugsweise kleiner ist als die Anzahl der Schaber (11).

8. Vorrichtung nach einem der Ansprüche 1 bis 7, dadurch gekennzeichnet, daß die Nuten (29) sägezahnähnlichen Querschnitt haben, dessen steilere Flanke (30) an der Ablaufseite der Schaber (11) liegt.

9. Vorrichtung nach einem der Ansprüche 1 bis 8, dadurch gekennzeichnet, daß die Breite der Nuten (29) sich zur Tiefe der Nuten (29) wie 2:1 bis 6:1, vorzugsweise 3:1 bis 5:1, verhält.

10. Vorrichtung nach einem der Ansprüche 1 bis 9, dadurch gekennzeichnet, daß die Nuten (29) schräg zur Achse des Abfuhrkanales (12) verlaufen.

11. Vorrichtung nach einem der Ansprüche 1 bis 10, dadurch gekennzeichnet, daß die Schaber (11) nur in der gelochten Zone (20) des Filterelementes (3) an dieses angedrückt sind, vorzugsweise durch Federn (28) und bzw. oder durch den Druck des zugeführten Kunststoffgutes.

12. Vorrichtung nach einem der Ansprüche 1 bis 11, dadurch gekennzeichnet, daß das Filterelement (3) scheibenförmig, vorzugsweise mit kreisrundem Umfang, oder zylindrisch ist.

13. Vorrichtung nach Anspruch 12, dadurch gekennzeichnet, daß bei scheibenförmigem Filterelement (3) die Zufuhr des Kunststoffgutes vom Rand her erfolgt und daß der Abfuhrkanal (12) im Zentrum des Filterelementes (3) angeordnet ist, wobei im Abfuhrkanal (12) eine Schnecke (13) zum Transport der Rückstände angeordnet ist.

14. Vorrichtung nach Anspruch 13, dadurch gekennzeichnet, daß die Achsen (46) der Filtrierlöcher (7) der gelochten Zone (20) relativ zur radialen Richtung des Filterelementes (3) geneigt sind, vorzugsweise um einen Winkel (β) von 30 bis 95°, wobei diese Neigung gegebenenfalls nach beiden Richtungen gerichtet ist.

15. Vorrichtung nach Anspruch 13 oder 14, dadurch gekennzeichnet, daß der Zuströmkanal (6) zwischen zwei scheibenförmige Filterelemente (3) führt, die parallel zueinander angeordnet sind und von Schabern (11) bestrichen werden, die von einem beiden Filterelementen (3) gemeinsamen, zwischen den Filterelementen (3) angeordneten, vorzugsweise ebenfalls scheibenförmigen Schaberträger (45) getragen sind.

16. Vorrichtung nach Anspruch 15, dadurch gekennzeichnet, daß jedem der beiden Filterelemente (3) ein gesonderter Abschnitt der Schnecke (13) zugeordnet ist, wobei die beiden Abschnitte der Schnecke (13) nach einander entgegengesetzten Richtungen fördern.

17. Vorrichtung nach Anspruch 16, dadurch gekennzeichnet, daß zumindest einem der beiden-Abschnitte der Schnecke (13) eine Temperatursteuerung zugeordnet ist.

18. Vorrichtung nach Anspruch 16 oder 17, dadurch gekennzeichnet, daß beide Abschnitte der Schnecke (13) drehschlüssig miteinander gekuppelt und von einem gemeinsamen Motor angetrieben sind.

19. Vorrichtung nach einem der Ansprüche 1 bis 18, dadurch gekennzeichnet, dass die Schaber (11) entlang leistenartiger Bahnen angeordnet, jedoch für jede Bahn in Schaberelemente (25) unterteilt sind, die voneinander in Abstand liegen, wobei die zwischen benachbarten Schaberelementen (25) liegenden Lücken (49) aufeinanderfolgender Schaber (11), in Umlaufrichtung der Schaber (11) bzw. des Filterelementes (3) gesehen, relativ zueinander versetzt sind.

20. Filterelement für eine Vorrichtung zur Filtrierung plastifizierten thermoplastischen Kunststoffgutes, mit einem Hohlzylinder (17), der eine gelochte Zone (20) mit Filtrierlöchern (7) aufweist und an seiner von seiner Innenseite gebildeten Abstromseite durch einen gleichfalls hohlzylindrischen Abstützkörper (18) abgestützt ist, der Bohrungen (19) aufweist, deren Durchmesser größer ist als jener der Filtrierlöcher (7) und an seinem einen Ende offen, an seinem anderen Ende jedoch geschlossen ist, wobei der Abstützkörper (18) mit einer axialen Verlängerung versehen ist, die eine an die gelochte Zone (20) anschließende lochfreie Zone (21) und eine Schnecke (13) oder eine drehschlüssige Verbindung zu einer Welle (5) aufweist, dadurch gekennzeichnet, dass an der Zustromseite der lochfreien Zone (21) Nuten (29) vorhanden sind, die schräg zur Achse der Verlängerung verlaufen.

21. Filterelement für eine Vorrichtung zur Filtrierung plastifizierten thermoplastischen Kunststoffgutes, mit einem Hohlzylinder (17), der eine gelochte Zone (20) mit Filtrierlöchern (7) aufweist und an seiner von seiner Außenseite gebildeten Abstromseite durch einen gleichfalls hohlzylindrischen Abstützkörper (18) abgestützt ist, der Bohrungen (19) aufweist, deren Durchmesser größer ist als jener der Filtrierlöcher (7), dadurch gekennzeichnet, dass der Abstützkörper (18) mit einer axialen Verlängerung versehen ist, die eine an die gelochte Zone (20) anschließende lochfreie Zone (21) aufweist, an deren von ihrer Innenseite gebildeten Zustromseite Nuten (29) vorhanden sind, die schräg zur Achse der Verlängerung verlaufen.

22. Scheibenförmiges Filterelement für eine Vorrichtung zur Filtrierung plastifizierten thermoplastischen Kunststoffgutes, wobei die Scheibe Filtrierlöcher (7) aufweist und an ihrer Abstromseite durch einen Abstützkörper (18) abgestützt ist, der Bohrungen (19) aufweist, deren Durchmesser größer ist als jener der Filtrierlöcher (7), dadurch gekennzeichnet, dass die Scheibe nur in ihrem radial äußeren Bereich eine Zone (20) mit Filtrierlöchern (7) aufweist, wogegen im zentralen Bereich der Scheibe eine lochfreie Zone (21) vorgesehen ist, an deren Zustromseite Nuten (29) eingearbeitet sind, deren Richtung zur Radialrichtung der Scheibe geneigt ist.

23. Filterelement nach Anspruch 20, 21 oder 22, dadurch gekennzeichnet, dass die lochfreie Zone (21) eine größere Wandstärke hat als die gelochte Zone (20).

## Claims

1. A device for filtering plasticised thermoplastic material, comprising a housing (1) with at least one inflow channel (6) for the material to be filtered and conveying this material to the inflow side of at least one filter element (3), wherein the filter element (3) has fine filtering perforations (7) for the filtrate, and at least one outflow channel (9) for the filtrate leads out of the housing (1) from the outflow side of the filter element (3), and wherein scrapers (11) are arranged on the inflow side of the filter element (3) and are moved relative thereto, the scraper edges (24) sweeping over the filter element (3) and thereby conveying the residues along the surface of the filter element (3) to at least one discharge channel (12), and wherein, in the discharge direction of the residues, a perforation-free zone (21) adjoins the zone (20) of the filter element (3) provided with filtering perforations (7) and is likewise swept over by the scrapers (11), characterised in that grooves (29) are provided in the surface (53) of the perforation-free zone (21) facing the scrapers (11), the direction of the grooves (29) intersecting the direction of the edges (24) of the scrapers (11) sweeping over these grooves (29) in such a manner that the concentrated mass in the perforation-free zone (21) is conveyed towards the discharge channel (12) in greater quantities.

2. A device according to claim 1, characterised in that the perforation-free zone (21) of the filter element (3) has a greater wall thickness than the zone (20) provided with filtering perforations (7).

3. A device according to claims 1 and 2, characterised in that the length of the perforation-free zone (21), measured in the discharge direction of the residues, and the length of the zone (20) provided with filtering perforations (7), measured in the same direction, are in a ratio of 0.5:1 to 1:1.

4. A device according to any one of claims 1 to 3, characterised in that the axes (46) of the filtering perforations (7) are inclined in the discharge direction of the residues, preferably at an angle α of 50° to 80° to the surface (53) of the filter element (3).

5. A device according to any one of claims 1 to 4, characterised in that the scrapers (11) and/or the grooves (29) extend along curved paths, e.g. spirally.

6. A device according to claim 5, characterised in that the grooves (29) and the scrapers (11) curve in opposite directions.

7. A device according to any one of claims 1 to 6, characterised in that the scrapers (11) advance towards a screw (13) arranged in the discharge channel (12), the number of turns of the screw being equal to or preferably smaller than the number of scrapers (11).

8. A device according to any one of claims 1 to 7, characterised in that the grooves (29) have a sawtooth-shaped cross-section, the steeper flank (30) of which is on the delivery side of the scrapers (11).

9. A device according to any one of claims 1 to 8, characterised in that the width of the grooves (29) and the depth of the grooves (29) are in a ratio of 2:1 to 6:1, preferably 3:1 to 5:1.

10. A device according to any one of claims 1 to 9, characterised in that the grooves (29) extend obliquely to the axis of the discharge channel (12).

11. A device according to any one of claims 1 to 10, characterised in that the scrapers (11) are pressed against the filter element (3) only in the perforated zone (20) thereof, preferably by springs (28) and/or by the pressure of the supplied plastics material.

12. A device according to any one of claims 1 to 11, characterised in that the filter element (3) is disc-shaped, preferably with a circular circumference, or cylindrical.

13. A device according to claim 12, characterised in that, with a disc-shaped filter element (3), the plastics material is supplied from the edge and in that the discharge channel (12) is arranged in the centre of the filter element (3), a screw (13) being arranged in the discharge channel (12) for conveying the residues.

14. A device according to claim 13, characterised in that the axes (46) of the filtering perforations (7) of the perforated zone (20) are inclined relative to the radial direction of the filter element (3), preferably at an angle (β) of 30° to 95°, this angle optionally extending in both directions.

15. A device according to claim 13 or 14, characterised in that the inflow channel (6) extends between two disc-shaped filter elements (3) arranged parallel to one another and swept over by scrapers (11) carried by a preferably likewise disc-shaped scraper carrier (45) common to both filter elements (3) and arranged therebetween.

16. A device according to claim 15, characterised in that a separate portion of the screw (13) is associated with each of the two filter elements (3), the two portions of the screw (13) feeding in opposite directions.

17. A device according to claim 16, characterised in that a temperature control means is associated with at least one of the two portions of the screw (13).

18. A device according to claim 16 or 17, characterised in that the two portions of the screw (13) are rotationally interconnected and are driven by a common motor.

19. A device according to any one of claims 1 to 18, characterised in that the scrapers (11) are arranged along strip-type paths, but are divided into spaced scraper members (25) for each path, the gaps (49) between adjacent scraper members (25) of successive scrapers (11) being staggered relative to one another when viewed in the circumferential direction of the scrapers (11) or the filter element (3).

20. A filter element for a device for filtering plasticised thermoplastic material, comprising a hollow cylinder (17) having a perforated zone (20) with filtering perforations (7) and supported by a likewise hollow cylindrical supporting body (18) at its outflow end, formed by its inner end, the supporting body (18) having bores (19) of a larger diameter than the filtering perforations (7) and being open at one end, but closed at the other end, wherein the supporting body (18) is provided with an axial extension having a perforation-free zone (21) adjacent to the perforated zone (20) and having a screw (13) or a rotational connection to a shaft (5), characterised in that grooves (29) are provided at the inflow end of the perforation-free zone (21) and extend obliquely to the axis of the extension.

21. A filter element for a device for filtering plasticised thermoplastic material, comprising a hollow cylinder (17) having a perforated zone (20) with filtering perforations (7) and supported by a likewise hollow cylindrical supporting body (18) at its outflow end, formed by its outer end, the supporting body (18) having bores (19) of a larger diameter than the filtering perforations (7), characterised in that the supporting body (18) is provided with an axial extension having a perforation-free zone (21) adjacent to the perforated zone (20), grooves (29) being provided at the inflow end of the perforation-free zone (21), formed by its inner end, and extending obliquely to the axis of the extension.

22. A disc-shaped filter element for a device for filtering plasticised thermoplastic material, wherein the disc has filtering perforations (7) and is supported at its outflow end by a supporting body (18) having bores (19) of a larger diameter than the filtering perforations (7), characterised in that the disc has a zone (20) provided with filtering perforations (7) in its radially outer region only, whereas a perforation-free zone (21) is provided in the central region of the disc, grooves (29) being formed at the inflow end of the perforation-free zone (21) and being orientated at an angle to the radial direction of the disc.

23. A filter element according to claim 20, 21 or 22, characterised in that the perforation-free zone (21) has a greater wall thickness than the perforated zone (20).

## Revendications

1. Dispositif de filtration de produits thermoplastiques plastifiés avec un carter (1) doté d'au moins un canal d'admission (6) du produit à filtrer, qui conduit ledit produit vers la face d'admission d'au moins un élément filtrant (3), l'élément filtrant (3) présentant de fins orifices de filtration (7) pour le filtrat, au moins un conduit d'évacuation (9) du filtrat reliant la face de refoulement de l'élément filtrant (3) à l'extérieur du carter (1), des racloirs (11) mobiles par rapport à l'élément filtrant (3) étant agencés sur la face d'admission de l'élément filtrant (3), les arêtes de raclage (24) desdits racloirs refoulant, lorsqu'elles balaient l'élément filtrant (3), les résidus le long de la surface de l'élément filtrant (3) vers au moins un canal d'évacuation (12), et la zone (20) de l'élément filtrant (3) qui est dotée d'orifices de filtration (7) se prolongeant, dans le sens d'évacuation des résidus, par une zone non perforée (21), également balayée par les racloirs (11),
caractérisé en ce que la surface (53) de la zone non perforée (21) qui est orientée vers les racloirs (11) présente des rainures (29), dont la direction croise celle -des arêtes de raclage (24) des racloirs (11) qui les balaient, de telle sorte que la masse épaissie qui se trouve sur la zone non perforée (21) est transportée de manière renforcée vers le canal d'évacuation (12).

2. Dispositif selon la revendication 1, caractérisé en ce que la zone non perforée (21) de l'élément filtrant (3) présente une épaisseur de paroi supérieure à la zone (20) dotée d'orifices de filtration (7).

3. Dispositif selon les revendications 1 et 2, caractérisé en ce que le rapport de la longueur de la zone non perforée (21), mesurée dans la direction d'évacuation des résidus, sur la longueur, mesurée dans la même direction, de la zone (20) dotée d'orifices de filtration (7) est compris entre 0,5:1 et 1:1.

4. Dispositif selon l'une des revendications 1 à 3, caractérisé en ce que les axes (46) des orifices de filtration (7) sont inclinés dans la direction d'évacuation des résidus, de préférence selon un angle α compris entre 50 et 80° par rapport à la surface (53) de l'élément filtrant (3).

5. Dispositif selon l'une des revendications 1 à 4, caractérisé en ce que les racloirs (11) et/ou les rainures (29) décrivent des trajectoires incurvées, par exemple des spirales.

6. Dispositif selon la revendication 5, caractérisé en ce que le sens d'incurvation des rainures (29) est opposé à celui des racloirs (11).

7. Dispositif selon l'une des revendications 1 à 6, caractérisé en ce que les racloirs (11) refoulent vers une vis sans fin (13) agencée dans le conduit d'évacuation (12), le nombre de pas de vis étant égal ou, de préférence, inférieur au nombre de racloirs (11).

8. Dispositif selon l'une des revendications 1 à 7, caractérisé en ce que les rainures (29) présentent une section transversale en dent de scie, dont le flanc le plus pentu (30) se trouve côté sortie des racloirs (11).

9. Dispositif selon l'une des revendications 1 à 8, caractérisé en ce que le rapport de la largeur des rainures (29) sur la profondeur desdites rainures (29) est compris entre 2:1 et 6:1, et de préférence entre 3:1 et 5:1.

10. Dispositif selon l'une des revendications 1 à 9, caractérisé en ce que les rainures (29) sont orientées obliquement par rapport à l'axe du conduit d'évacuation (12).

11. Dispositif selon l'une des revendications 1 à 10, caractérisé en ce que les racloirs (11) ne sont plaqués que contre la zone perforée (20) de l'élément filtrant (3), de préférence par des ressorts (28) et/ou sous l'effet de la pression exercée par le produit plastique admis.

12. Dispositif selon l'une des revendications 1 à 11, caractérisé en ce que l'élément filtrant (3) affecte la forme d'une plaque, de préférence de contour circulaire, ou celle d'un cylindre.

13. Dispositif selon la revendication 12,
caractérisé en ce que, dans le cas d'un élément filtrant (3) en forme de plaque, l'alimentation du produit plastique s'effectue depuis le bord et le conduit d'évacuation (12) est situé au centre de l'élément filtrant (3), une vis sans fin (13) étant agencée dans le conduit d'évacuation (12) pour évacuer les résidus.

14. Dispositif selon la revendication 13,
caractérisé en ce que les axes (46) des orifices de filtration (7) de la zone perforée (20) sont inclinés par rapport à la direction radiale de l'élément filtrant (3), de préférence selon un angle (β) compris entre 30 et 95°, cette inclinaison pouvant être orientée dans les deux sens.

15. Dispositif selon la revendication 13 ou 14, caractérisé en ce que le conduit d'admission (6) débouche entre deux éléments filtrants (3) parallèles en forme de plaque qui sont balayés par des racloirs (11) supportés par un support de racloirs (45), de préférence également en forme de plaque, agencé entre les éléments filtrants (3) et commun aux deux éléments filtrants (3).

16. Dispositif selon la revendication 15,
caractérisé en ce qu'à chacun des deux éléments filtrants (3) est associée une portion séparée de la vis sans fin (13), les deux portions de la vis sans fin (13) transportant dans des sens opposés.

17. Dispositif selon la revendication 16,
caractérisé en ce qu'au moins une des deux portions de la vis sans fin (13) est associée à un système de contrôle en température.

18. Dispositif selon la revendication 16 ou 17, caractérisé en ce que les deux portions de la vis sans fin (13) sont couplées solidaires en rotation et entraînées par un moteur commun.

19. Dispositif selon l'une des revendications 1 à 18, caractérisé en ce que les racloirs (11) sont agencés en barrettes, dans lesquelles ils sont divisés en éléments de raclage (25) distants les uns des autres, les intervalles (49) entre deux éléments de raclage voisins (25) étant décalés par rapport à ceux des racloirs suivants, vu dans le sens de rotation des racloirs (11) ou de l'élément filtrant (3).

20. Elément filtrant pour un dispositif de filtration de produits thermoplastiques plastifiés, comprenant un cylindre creux (17) qui présente une zone perforée (20) dotée d'orifices de filtration (7) et qui est supporté sur sa face de refoulement, qui est formée par sa face interne, par un corps d'appui (18) affectant également la forme d'un cylindre creux et présentant des trous (19) de diamètre supérieur à celui des orifices de filtration (7), ledit corps d'appui étant ouvert à l'une de ses extrémités et fermé à l'autre, ledit corps d'appui (18) étant en outre doté d'un prolongement axial qui présente une zone non perforée (21) adjacente à la zone perforée (20) et une vis sans fin (13) ou une liaison solidaire en rotation d'un axe (5), caractérisé en ce que la face d'admission de la zone non perforée (21) présente des rainures (29) orientées obliquement par rapport à l'axe du prolongement.

21. Elément filtrant pour un dispositif de filtration de produits thermoplastiques plastifiés, comprenant un cylindre creux (17) qui présente une zone perforée (20) dotée d'orifices de filtration (7) et qui est supporté sur sa face de refoulement, qui est formée par sa face externe, par un corps d'appui (18) affectant également la forme d'un cylindre creux et présentant des trous (19) de diamètre supérieur à celui des orifices de filtration (7), caractérisé en ce que ledit corps d'appui (18) est doté d'un prolongement axial qui présente une zone non perforée (21) adjacente à la zone perforée (20), dont la face d'admission, qui est formée par sa face interne, présente des rainures (29) orientées obliquement par rapport à l'axe du prolongement.

22. Elément filtrant en forme de plaque, pour un dispositif de filtration de produits thermoplastiques plastifiés, dans lequel la plaque présente des orifices de filtration (7) et est supportée sur sa face de refoulement par un corps d'appui (18) présentant des trous (19) de diamètre supérieur à celui des orifices de filtration (7), caractérisé en ce que la plaque ne présente une zone (20) dotée d'orifices de filtration (7) que sur sa région radialement externe, la région centrale de la plaque présentant une zone non perforée (21), dont la face d'admission présente des rainures (29) inclinées par rapport à la direction radiale de la plaque.

23. Elément filtrant selon la revendication 20, 21 ou 22, caractérisé en ce que la zone non perforée (21) présente une épaisseur de paroi supérieure à celle de la zone perforée (20).
